# EUROPÄISCHE PATENTANMELDUNG

(11) **EP 0 660 294 A1**
(43) Veröffentlichungstag der Anmeldung: **28.06.1995**
(21) Anmeldenummer: 94250086.9
(22) Anmeldetag: 02.04.1994
(51) Int. Cl.: G09F 15/00, B65F 1/14

(54) **Werbeschaukasten mit integrierten Kleinabfallbehältern**

(30) Priorität: 21.12.1993 DE 9319943 U
(71) Anmelder: Bernadotte, Evelyn, D-14193 Berlin (DE); Bernadotte, Thomas, D-14193 Berlin (DE)
(72) Erfinder: Bernadotte, Evelyn, D-14193 Berlin (DE); Bernadotte, Thomas, D-14193 Berlin (DE)

(57) **Zusammenfassung**

Werbeschaukasten (10), mit einem Gehäuse (11) zur Aufnahme von zur Entleerung entnehmbaren Einschubbehältern (22). Das Gehäuse (11) hat mindestens eine verschließbare Tür (18), mindestens eine Einwurföffnung (24) für Kleinabfälle und Seitenwänden (14), die mit Verglasungen (15) versehen sind. Hinter den Verglasungen (15) sind Werbeträger angeordnet. Die Verglasungen (15) bestehen aus zwei lösbar meiteinander verbundenen Scheiben, von denen die Innenscheibe als Werbeträger zur Aufnahme DIN-formatiger Werbeplakate dient und gegen die Außenscheibe preßbar ist.

## Beschreibung

Die Erfindung betrifft einen Werbeschaukasten, mit einem Gehäuse zur Aufnahme von zur Entleerung entnehmbaren Einschubbehältern, mit mindestens einer verschließbaren Tür, mit mindestens einer Einwurföffnung für Abfälle, mit Seitenwänden, die mit Verglasungen versehen sind, und mit Werbeträgern, die hinter den Verglasungen angeordnet sind.

Ein derartiger Werbeschaukasten dient auf Straßen und in öffentlichen Anlagen der Aufnahme von Abfall. Derartige Abfallbehälter sollen eine glatte Außenoberfläche aufweisen, die einfach gereinigt und sauber gehalten werden kann. Das Gehäuse soll mit großen, hygienisch einwandfrei zugänglichen Einwurföffnungen versehen sein. Der eingeworfene Abfall wird in Abfallbehältern gesammelt, die sich in dem Gehäuse befinden. Um die Kosten für derartige Abfallbehälter so gering wie möglich zu halten, sollen die Seitenwände des Gehäuses Werbung treibenden Unternehmen als Werbeträger angeboten werden. Problematisch ist dabei, daß Werbung nur dann wirksam ist, wenn sie auch ästhetisch und ansprechend dargeboten wird. Durch Witterungseinflüsse wie Feuchtigkeit oder Licht kann es zu Verwerfungen oder Wellungen der eingelegten Plakate kommen, die dann keinen sehr positiven Eindruck mehr vermitteln.

Aufgabe der vorliegenden Erfindung ist es, einen Werbeschaukasten der eingangs beschriebenen Art zu schaffen, mit dem Werbung auch bei ungünstigen Witterungseinflüssen ansprechend und ästhetisch einwandfrei präsentiert werden kann.

Gelöst wird diese Aufgabe dadurch, daß die Verglasungen aus zwei lösbar miteinander verbundenen Scheiben bestehen, von denen die Innenscheibe als Werbeträger zur Aufnahme DIN-formatiger, gegen die Außenscheibe preßbarer Werbeplakate ausgebildet ist. Durch diese Maßnahme wird ein Werbeschaukasten geschaffen, in dem die auf den Werbeträgern aufgebrachte Werbung stets glatt und verwerfungsfrei präsentiert wird. Auch bei Licht- und Feuchtigkeitseinflüssen sind die Plakate fest zwischen den Scheiben eingespannt, wobei die Innenscheibe als Streulichtscheibe ausgebildet ist und von innen beleuchtet werden kann. Dazu ist es bei einer Ausgestaltung vorgesehen, daß der Werbeträger ein Beleuchtungsrahmen zugeordnet ist und der Beleuchtungsrahmen als Träger für Beleuchtungsmittel vorgesehen ist.

Weitere vorteilhafte Maßnahmen sind in den übrigen Unteransprüchen beschrieben. Die Erfindung ist anhand eines Ausführungsbeispieles in den beiliegenden Zeichnungen dargestellt und wird nachfolgend näher beschrieben; es zeigt:
- **Figur 1**: die isometrische Darstellung eines Werbeschaukastens, mit verglasten Seitenflächen;
- **Figur 2**: die aufgeklappte Darstellung einer Verglasung, einer Werbeträger mit eingespanntem Werbeplakat;
- **Figur 3**: die Rückseite einer als Werbeträger ausgebildeten Innenscheibe, mit gegenklappbarem Beleuchtungsrahmen, aufgeklappt;
- **Figur 4**: die isometrische Darstellung eines Werbeschaukastens nach der Figur 1, mit aufgeklappter Seitentür und eingeschobenem Einschubbehälter;
- **Figur 5**: die isometrische Darstellung eines zweigeteilten Werbeschaukastens, mit großer und kleiner Seitentür und mit von zwei Seiten einschiebbaren Einschubbehältern.

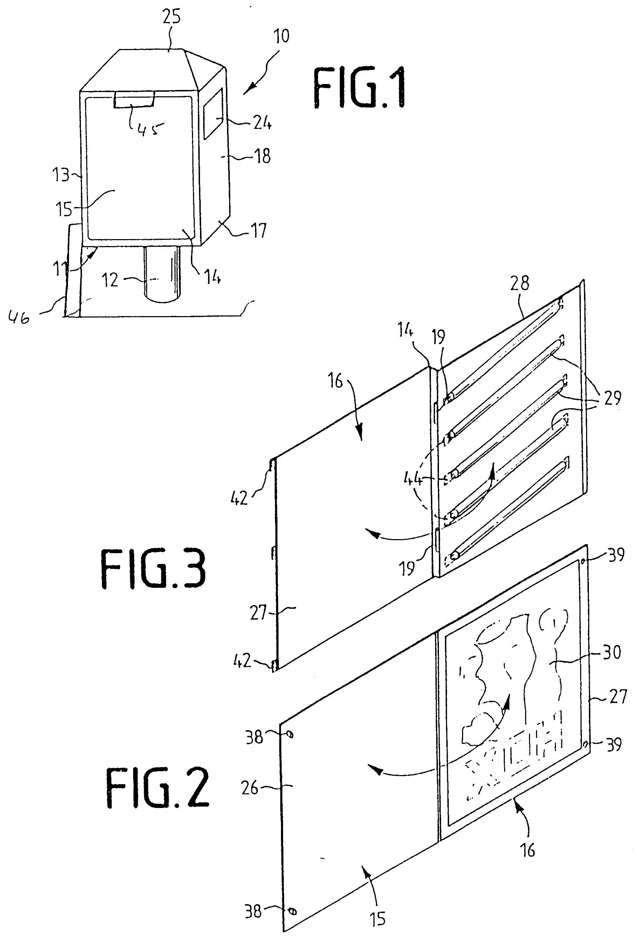

Der in der Figur 1 dargestellte Werbeschaukasten 10 besteht im wesentlichen aus einem Gehäuse 11, welches auf einem Sockel 12 auf öffentlichem Straßenland 35 aufgestellt ist. Das Gehäuse 11 weist sich jeweils paarweise einander gegenüberliegende Seitenwände 14 und Schmalseiten 17 auf. Die Seitenwände 14 sind mit Verglasungen 15 versehen, die in Rahmen 13 gehalten sind. Die Verglasungen 15 weisen dabei eine Größe von DIN-A1 bis DIN-A00 auf. Die Seitenwände 14 sind mit einer Antigraffitibeschichtung versehen. Ebenso sind die Schmalseiten 17 mit einer Antigraffitibeschichtung versehen.

Wie die Figur 2 zeigt, besteht die Verglasung 15 aus einer Außenscheibe 26 und einer Innenscheibe 27. Die Außenscheibe 26 besteht aus bruchsicherem Glas und einer Innenscheibe 27 aus ca. 8-10 mm starkem Acrylglas. Die Innenscheibe 27 dient zugleich als Werbeträger 16.

Die Scheiben 26 und 27 sind in Scharnieren 19 dicht gegeneinander klappbar und können in Rastverschlüssen 42 gegeneinander gehalten werden. Bei einer anderen Ausführung ist die Außenscheibe 26 mit Stiften 38 versehen, die mit Bohrungen 39 in den Innenscheiben 27 korrespondieren. Über die Stifte 38 und die Bohrungen 39 kann die Innenscheibe 27 dicht mit der Außenscheibe 26 verbunden werden.

Zwischen die Scheiben 26 und 27 kann ein Werbeplakat 30 dicht anliegend eingespannt und preßgehalten werden. Die Scheiben 26 und 27 liegen dabei plan aufeinander, wodurch auch das zwischen ihnen eingespannte Werbeplakat 30 jederzeit plan und eben gehalten wird. Einflüsse von Licht oder Feuchtigkeit, die üblicherweise zu Verwerfungen führen, werden dadurch ausgeschlossen.

Wie die Figur 3 zeigt, ist gegen die Rückseite des Werbeträgers 16 ein Beleuchtungsrahmen 28 geklappt werden. Der Beleuchtungsrahmen 28 ist mit einer Vielzahl von Beleuchtungsmitteln 29, beispielsweise in Form von drei bis fünf senkrecht, waagerecht oder schräg verlaufenden Leuchtstoffröhren, versehen. Der Beleuchtungsrahmen 28 kann ebenfalls in Scharnieren 19 gegen den Werbeträger 16 geklappt und in Rastverschlüssen 42 dicht mit diesem verbunden werden.

Der Beleuchtungsrahmen 28 ist mit Kontakten 44 versehen, über die elektrischer Strom zu den Beleuchtungsmitteln 29 geführt werden kann. Mit Hilfe der Beleuchtungsmittel 29 kann der Werbeträger 16, der vorzugsweise aus Acryl- oder Milchglas besteht, von innen beleuchtet werden.

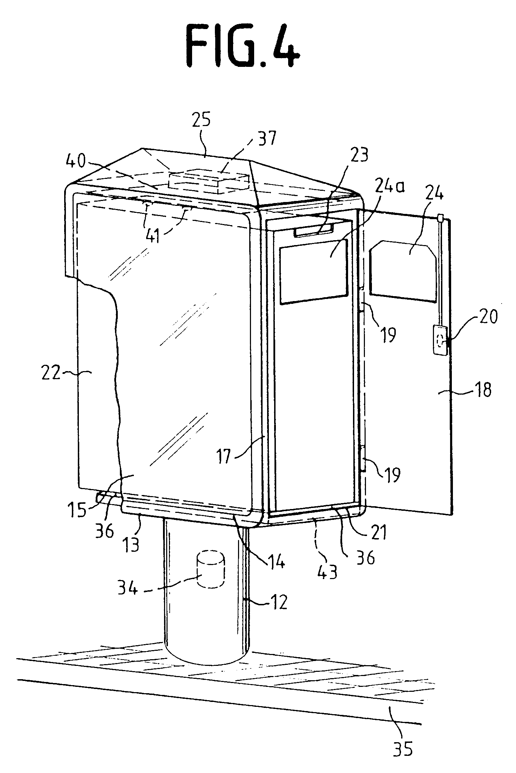

Wie die Figur 4 zeigt, ist das Gehäuse 11 an mindestens einer seiner Schmalseiten 17 mit einer seitlich angeschlagenen Tür 18 versehen. Die Tür 18 kann in Scharnieren 19 bewegt und mit einem Schloß, vorzugsweise einem Stangenschloß 20 verschlossen werden.

Mit der Tür 18 kann eine große Gehäuseöffnung 21 verschlossen werden, durch die lose eingestellte Einschubbehälter 22 entnommen oder eingeschoben werden können.

Um zu verhindern, daß hinter den Einschubbehälter 22 gegriffen werden kann, ist dieser mit einem Abdeckblech 40 abgedeckt. Das Abdeckblech 40 wird dabei von an der Innenwandung des Gehäuses 11 angebrachten Rasterungen 41 in seine Lage gehalten.

Der Einschubbehälter 22 dient der Aufnahme von durch eine Einwurföffnung 24 eingeworfenen Kleinabfall und kann mit Hilfe eines Handgriffes 23 leicht gehandhabt werden. Der Einschubbehälter 22 ist mit einer Einwurföffnung 24a versehen, die mit der Einwurföffnung 24 der Tür 18 korrespondiert.

Um den Einschubbehälter 22 leichter handhaben zu können, ist er in dem Gehäuse 11 auf einem Einlegeblech 36 abgestellt. Das Einlegeblech 36 bietet eine Glatte Oberfläche und deckt in dem Gehäuse 11 zugleich den Sockel 12 nach oben ab. Es weist im Bereich der Tür 18 eine Abwinklung 43 auf, welche die Gehäuseöffnung 21, beispielsweise bei unsanfter Handhabung des Einschubbehälters 22, vor Beschädigung schützt.

Auf der der Tür 18 gegenüberliegenden Schmalseite 17 kann eine weitere Einwurföffnung 24 vorgesehen sein, die mit einer weiteren Einwurföffnung 24a des Einschubbehälters 22 oder mit einem entgegengesetzt eingeschobenen, zweiten Einschubbehälter 22a korrespondiert.

Zum Einspannen von Werbeplakaten 30 kann die Tür 18 geöffnet, der Einschubbehälter 22 entnommen und der Werbeträger 16 von der Außenscheibe 26 der Verglasung 15 abgeklappt werden. Nach Einspannen des Werbeplakates 30 kann die Verglasung 15 wieder geschlossen und der Werbeträger 16 dicht gegen die Außenscheibe 26 geklappt werden.

Der Sockel 12 des Werbeschaukastens 10 ist hermetisch und wasserdicht abgeschlossen. In dem Sockel 12 ist die zur Steuerung der Beleuchtungsmittel 29 erforderliche Elektronik 34 raumsparend und vor fremdem Zugriff gesichert untergebracht. Ferner ist ein abgewinkeltes Dach 25 vorgesehen, in dem ein Teil der der Beleuchtung 29 zugeordneten elektrischen Drosseln 37 untergebracht sind, während ein anderer Teil ebenfalls in dem Sockel 12 untergebracht ist. Durch die bei Betrieb der Beleuchtung 29 entstehende Abwärme wird das Dach 25 erwärmt und kann so im Winter schnee- und eisfrei gehalten werden.

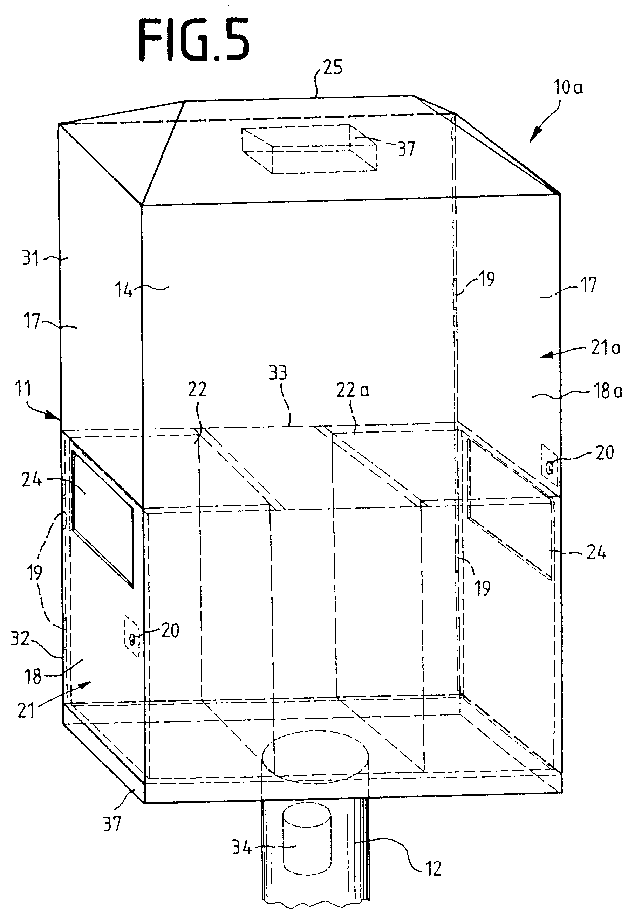

In der Figur 5 ist ein großer Werbeschaukasten 10a dargestellt, dessen Gehäuse 11 in ein Oberteil 31 und ein Unterteil 32 geteilt ist. Das Gehäuse 11 ist dabei mit einer großen Gehäuseöffnung 21a versehen, die mit einer großen Tür 18a verschließbar und mit einer kleinen Gehäuseöffnung 21 versehen, die mit einer kleinen Tür 18 verschließbar ist.

Die große Tür 18a reicht über die gesamte Höhe des Gehäuses 11, so daß durch sie sowohl das Oberteil 31 als auch das Unterteil 32 begehbar sind; die der großen Tür 18a gegenüberliegende kleine Tür 18 erlaubt lediglich einen Zugang zu dem Unterteil 32. In dem Unterteil 32 sind Einschubbehälter 22 und 22a abgestellt, die durch einander gegenüberliegende Einwurföffnungen 24 und 24a zugänglich sind.

Um zu verhindern, daß unbefugt in das Oberteil 31 gegriffen werden kann, ist ein einschiebbares Zwischenblech 33 vorgesehen. Das Zwischenblech 33 schließt das Oberteil 31 nach unten und die Einschubbehälter 22 und 22a nach oben hin ab.

Zum Einspannen von Werbeplakaten 30 in die Seitenwände 14 kann die große Tür 18a geöffnet und die Einschubbehälter 22, 22a sowie das Zwischenblech 33 entnommen werden. Das Gehäuse 11 ist dann durch die große, etwa mannshohe Gehäuseöffnung 21a frei begehbar. Dadurch können auch großformatige Werbeplakate 30 auf die von den Verglasungen 15 abgeklappte Werbeträger 16 aufgebracht werden.

Die Seitenwände 14 können dabei auch getrennte Werbeträger 16 für zwei Werbeplakate 30 des Formats DIN-A0 oder des doppelten Formates DIN-A00 aufnehmen. Durch die der großen Tür 18a gegenüberliegende kleine Tür 18 kann der dahinter abgestellte Einschubbehälter 22 im Falle seiner Entleerung entnommen und wieder eingeschoben werden.

Bei einer Ausführung kann an dem Gehäuse 11 mindestens ein Aschenbecher 45 angebracht sein. Es ist auch vorgesehen, an dem Gehäuse 11 einen oder mehrere Fahrradständer 46 anzubringen. Die Fahrradständer 46 sind dabei vorzugsweise auf der der Tür 18 gegenüber liegenden Schmalseite 17 angebracht.

### Bezugszeichen

- 10: Werbeschaukasten
- 10a: Werbeschaukasten
- 11: Gehäuse
- 12: Sockel
- 13: Rahmen
- 14: Seitenwand
- 15: Verglasung
- 16: Werbeträger
- 17: Schmalseite
- 18, 18a: Tür
- 19: Scharnier
- 20: Stangenschloß
- 21: Gehäuseöffnung
- 21a: Gehäuseöffnung
- 22: Behälter
- 22a: Behälter
- 23: Handgriff
- 24: Einwurföffnung
- 24a: Einwurföffnung
- 25: Dach
- 26: Außenscheibe
- 27: Innenscheibe
- 28: Rahmen
- 29: Beleuchtung
- 30: Werbeplakat
- 31: Oberteil
- 32: Unterteil
- 33: Zwischenblech
- 34: Elektronik
- 35: Straßenland
- 36: Einlegeblech
- 37: Drossel
- 38: Stift
- 39: Bohrung
- 40: Abdeckblech
- 41: Rasterung
- 42: Rastverschluß
- 43: Abwinklung
- 44: Kontakt
- 45: Aschenbecher
- 46: Fahrradständer

## Patentansprüche

1. Werbeschaukasten, mit einem Gehäuse zur Aufnahme von zur Entleerung entnehmbaren Einschubbehältern, mit mindestens einer verschließbaren Tür, mit mindestens einer Einwurföffnung für Abfälle, mit Seitenwänden, die mit Verglasungen versehen sind, und mit Werbeträgern, die hinter den Verglasungen angeordnet sind, dadurch gekennzeichnet, daß die Verglasungen (15) aus zwei lösbar miteinander verbundenen Scheiben (26, 27) bestehen, von denen die Innenscheibe (27) als Werbeträger (16) zur Aufnahme DIN-formatiger, gegen die Außenscheibe (26) preßbarer Werbeplakate (30) ausgebildet ist.

2. Werbeschaukasten nach Anspruch 1, dadurch gekennzeichnet, daß die Werbeträger (16) streulichtdurchlässig ist und einen Beleuchtungsrahmen (28) aufweist, der als Träger für Beleuchtungsmittel (29) ausgebildet ist.

3. Werbeschaukasten nach den Ansprüchen 1 und 2, dadurch gekennzeichnet, daß die Verglasung (15) eine Außenscheibe (26) aus Glas und eine Innenscheibe (27) aus Acrylglas aufweist.

4. Werbeschaukasten nach den Ansprüchen 1 bis 3, dadurch gekennzeichnet, daß die Außenscheibe (26) und die Innenscheibe (27) in Scharnieren (19) gegeneinander klappbar und durch Schließmittel (38, 39, 42) fest miteinander verbindbar sind, wobei die Schließmittel wahlweise aus der Außenscheibe (26) zugeordneten Stiften (38) und der Innenscheibe (27) zugeordneten, mit den Stiften (38) korrespondierenden Bohrungen (39) oder Rastverschlüssen (42) bestehen, die zum Schließen der Verglasung (15) fest miteinander verbindbar sind.

5. Werbeschaukasten nach den Ansprüchen 1 bis 4, dadurch gekennzeichnet, daß das Gehäuse (11) mit mindestens einer, in Scharnieren (19) drehbaren Tür (18, 18a) versehen ist und mindestens einen austauschbaren Einschubbehälter (22, 22a) aufnimmt.

6. Werbeschaukasten nach den Ansprüchen 1 bis 5, dadurch gekennzeichnet, daß der Einschubbehälter (22, 22a) mit einem Abdeckblech (40) abgedeckt und das Abdeckblech (40) in Rasterungen (41) in dem Gehäuse (11) gehalten ist.

7. Werbeschaukasten nach den Ansprüchen 1 bis 6, dadurch gekennzeichnet, daß das Gehäuse (11) mit einem hermetisch abgeschlossenen, wasserdichten Sockel (12) versehen ist und in dem Sockel (12) eine Beleuchtungsmittel (29) steuernde Elektronik (34) untergebracht ist.

8. Werbeschaukasten nach den Ansprüchen 1 bis 7, dadurch gekennzeichnet, daß das Gehäuse (11) in ein Oberteil (31) und ein Unterteil (32) unterteilt ist, wobei das Oberteil (31) durch ein in das Gehäuse (11) einschiebbares Zwischenblech (33) von dem Unterteil (32) getrennt ist.

9. Werbeschaukasten nach einem der vorhergehenden Ansprüche 1 bis 8, dadurch gekennzeichnet, daß das Gehäuse (11) mit einer großen Gehäuseöffnung (21a) und einer kleinen Gehäuseöffnung (21) versehen ist, die große Gehäuseöffnung (21a) mit einer großen Tür (18a) verschließbar ist, durch die große Tür (18a) das Oberteil (31) und das Unterteil (32) zugänglich sind, während das Unterteil auf der der großen Tür (18a) gegenüberliegenden Seite durch eine kleine Tür (18) zugänglich ist und in das Unterteil (32) zwei Einschubbehälter (22, 22a) einschiebbar sind, wobei die Tür (18, 18a) an den Schmalseiten (17) des Gehäuses (11) angeschlagen und mit einem Stangenschloß (20) verschließbar ist.

10. Werbeschaukasten nach einem der vorhergehenden Ansprüche 1 bis 9, dadurch gekennzeichnet, daß an dem Gehäuse (11) mindestens ein Aschenbecher (45) und/oder ein Fahrradständer (46) angebracht ist.
